# EUROPÄISCHE PATENTSCHRIFT

(11) **EP 3 366 421 B1**
(45) Veröffentlichungstag und Bekanntmachung des Hinweises auf die Patenterteilung: **10.07.2019**
(21) Anmeldenummer: 18158296.6
(22) Anmeldetag: 23.02.2018
(51) Int. Cl.: B25B 1/10, B23Q 3/06, B25B 1/24, B25B 5/00, B25B 5/16

(54) **MODULPLATTE ZUM SPANNEN VON BAUTEILEN**
MODULAR PANEL FOR CLAMPING COMPONENTS
PLAQUE MODULAIRE DESTINÉE À SERRER DES COMPOSANTS

(30) Priorität: 24.02.2017 DE 102017001782
(43) Veröffentlichungstag der Anmeldung: 29.08.2018
(73) Patentinhaber: Ludwig Ehrhardt GmbH, 35321 Laubach (DE)
(72) Erfinder: Hippenstiel, Reiner, 57080 Siegen (DE)
(74) Vertreter: v. Bezold & Partner Patentanwälte - PartG mbB

(56) Entgegenhaltungen:
- EP-A1- 2 803 446
- EP-A1- 3 034 233
- WO-A1-2007/031296
- DE-A1- 2 704 053

## Beschreibung

Die Erfindung betrifft eine Modulplatte zum Spannen von Bauteilen, insbesondere zum Spannen von Werkstücken in einem Bearbeitungszentrum zur spanenden Bearbeitung der gespannten Werkstücke. Derartige Modulplatten sind an sich aus dem Stand der Technik bekannt und werden in Bearbeitungszentren eingesetzt, um die zu bearbeitenden Werkstücke während der spanenden Bearbeitung einzuspannen. Beispielsweise wird eine solche Modulplatte von der STARK Spannsysteme GmbH unter der Produktbezeichnung "SPEEDY" vertrieben. Die bekannten Modulplatten dieser Arten bieten jedoch beim Einspannen der Werkstücke noch nicht die gewünschte Flexibilität.

Aus DE 20 2006 009 437 U1 ist eine Modulplatte mit Aufnahmenuten bekannt, wobei in den Aufnahmenuten Schraubstöcke fixiert werden können. Das Lösen und Arretieren der Schraubstöcke in den Aufnahmenuten ist hierbei jedoch sehr aufwändig, so dass ein rasches Verschieben der Schraubstöcke im Betrieb nicht möglich ist.

Zum allgemeinen technischen Hintergrund der Erfindung ist auch hinzuweisen auf DE 20 2013 008 519 U1, DE-PS 22 52 269, EP 0 901883 A1, US 4 881 727, EP 2 803 446 A1, WO 2007/031296 A1 und DE 10 2009 050 760 A1.

Schließlich offenbaren EP 3 034 233 A1 und DE 27 04 053 A1 Modulplatten im weiteren Sinne, bei denen ein Schraubstock in einer Aufnahmenut durch Spannschrauben in verschiedenen Positionen entlang der Aufnahmenut festgespannt werden kann. Diese Befestigungsart ist jedoch noch nicht vollständig befriedigend.

Der Erfindung liegt deshalb die Aufgabe zugrunde, eine entsprechend verbesserte Modulplatte zu schaffen.

Diese Aufgabe wird durch eine erfindungsgemäße Modulplatte gemäß Anspruch 1 gelöst.

Die Erfindung sieht eine Arretierungsspindel vor, um einen Schraubstock wahlweise in der Aufnahmenut zu arretieren oder für eine Verschiebung des Schraubstocks entlang der Aufnahmenut zu lösen.

Die erfindungsgemäße Modulplatte dient hierbei zum Spannen von Bauteilen, insbesondere zum Spannen von Werkstücken in einem Bearbeitungszentrum zur spanenden Bearbeitung der gespannten Werkstücke.

In Übereinstimmung mit dem Stand der Technik weist die erfindungsgemäße Modulplatte zunächst einen Plattenkörper auf, in dessen Oberseite mindestens eine Aufnahmenut verläuft.

Die erfindungsgemäße Modulplatte zeichnet sich auch dadurch aus, dass in der Aufnahmenut mindestens ein Schraubstock befestigt ist, der zum Festspannen der zu bearbeitenden Werkstücke während der spanenden Bearbeitung dient.

In einem bevorzugten Ausführungsbeispiel der Erfindung befinden sich in dem Plattenkörper mehrere Aufnahmenuten, so dass der Schraubstock wahlweise in einer der Aufnahmenuten befestigt werden kann.

Vorzugsweise sind die Aufnahmenuten in dem Plattenkörper teilweise parallel zueinander und teilweise rechtwinklig zueinander angeordnet. Die Aufnahmenuten können sich also in dem Plattenkörper rechtwinklig schneiden, so dass der Schraubstock in zwei verschiedenen räumlichen Ausrichtungen angeordnet werden kann. Beispielsweise können vier Aufnahmenuten parallel zueinander in einer ersten Richtung und drei Aufnahmenuten rechtwinklig dazu in einer zweiten Richtung angeordnet sein.

Alternativ können die Aufnahmenuten in dem Plattenkörper auch radial zu einem Mittelpunkt verlaufen, was das Spannen von runden Bauteilen ermöglicht, die dann konzentrisch zu dem Mittelpunkt der radialen Aufnahmenuten angeordnet werden.

Hierbei können sich die Spannbacken der einzelnen Schraubstücke jeweils auf derselben Seite des Mittelpunkts befinden, d.h. die einzelnen Schraubstöcke überspannen den Mittelpunkt nicht, sondern sind auf einer Seite des Mittelpunkts angeordnet.

Es besteht jedoch alternativ auch die Möglichkeit, dass die Spannbacken bei zumindest einem Schraubstock auf gegenüberliegenden Seiten des Mittelpunkts angeordnet sind. Hierbei erstrecken sich die Arretierungsspindel und/oder Spannspindel vorzugsweise über den Mittelpunkt. Die Arretierungsspindel bzw. Spannspindel ist hierbei also relativ lang.

Der Schraubstock selbst kann weitgehend herkömmlich aufgebaut sein, so dass hinsichtlich des konstruktiven Aufbaus und der Funktionsweise des Schraubstocks beispielhaft auf DE 10 2015 003 662 B3 und WO 2016/150536 A1 verwiesen wird, wobei der Inhalt dieser Veröffentlichungen der vorliegenden Beschreibung hinsichtlich des Schraubstocks in vollem Umfang zuzurechnen ist.

In dem bevorzugten Ausführungsbeispiel der Erfindung weist der Schraubstock mindestens zwei Spannbacken auf, die mittels einer drehbar gelagerten Spannspindel relativ zueinander oder relativ zu einer Festbacke gespannt werden können.

Bei dem bevorzugten Ausführungsbeispiel der Erfindung weist der Schraubstock eine Schlittenführung auf, in der zwei Schlitten entlang der Schlittenführung verschiebbar gelagert sind, wobei die beiden Schlitten an ihrer Oberseite die beiden Spannbacken tragen. Die Schlittenführung ist hierbei im Gegensatz zu den herkömmlichen Schraubstöcken mindestens teilweise in der Aufnahmenut des Plattenkörpers angeordnet und kann in der Aufnahmenut wahlweise in Längsrichtung fixiert oder entlang der Aufnahmenut verschoben werden.

Die Fixierung bzw. Lösung des Schraubstocks in der Aufnahmenut erfolgt - wie bereits vorstehend kurz erwähnt wurde - mittels einer Arretierungsspindel, die beispielsweise in der Schlittenführung des Schraubstocks drehbar gelagert sein kann, d.h. vorzugsweise unterhalb der Spannspindel. Die Spannspindel und die Arretierungsspindel sind dann vorzugsweise an einer Seitenfläche der Modulplatte für eine Bedienung zugänglich.

Die Arretierung des Schraubstocks in der Aufnahmenut erfolgt vorzugsweise mittels eines Klemmelements, wobei das Klemmelement eine kraftschlüssige Verbindung mit der Aufnahmenut herstellen kann. Hierzu ist das Klemmelement in der Schlittenführung angeordnet und weist zwei Klemmarme auf, die seitlich aufspreizbar sind, um das Klemmelement in der Aufnahmenut kraftschlüssig zu fixieren. Die Arretierungsspindel spreizt dann die beiden Klemmarme des Klemmelements in Abhängigkeit von ihrer Drehstellung seitlich auf. Im aufgespreizten Zustand klemmen die Klemmarme den Schraubstock dann in der Aufnahmenut fest. Im zusammengezogenen Zustand der Klemmarme ist das Klemmelement mit dem Schraubstock dagegen entlang der Aufnahmenut des Plattenkörpers verschiebbar.

Weiterhin ist zu erwähnen, dass die Aufnahmenut vorzugsweise auch eine Quernut aufweist, um Kräfte rechtwinklig zur Oberfläche des Plattenkörpers aufnehmen zu können. Beispielsweise kann die Aufnahmenut als T-Nut ausgebildet sein, insbesondere entsprechend der Deutschen Industrienorm (DIN) Nr. 650 oder Nr. 508.

Ferner ist zu erwähnen, dass in den Aufnahmenuten in Nutlängsrichtung hintereinander mehrere Schraubstöcke angeordnet sein können.

Weiterhin ist noch zu erwähnen, dass die Erfindung nicht nur Schutz beansprucht für die vorstehend beschriebene erfindungsgemäße Modulplatte als einzelnes Bauteil. Vielmehr beansprucht die Erfindung gemäß Anspruch 10 auch Schutz für ein Bearbeitungszentrum zur spanenden Bearbeitung von Werkstücken, wobei das Bearbeitungszentrum mit einer erfindungsgemäßen Modulplatte ausgestattet ist.

Schließlich beansprucht die Erfindung auch Schutz für ein entsprechendes Verfahren gemäß Anspruch 11 zum Festspannen eines Bauteils in einer Modulplatte. Dabei wird ein Schraubstock in einer Aufnahmenut an der Oberseite der Modulplatte arretiert. Das festzuspannende Bauteil wird dann in dem Schraubstock festgespannt.

Beim Festspannen eines Bauteils in mehreren Schraubstöcken besteht hierbei die Gefahr einer mechanischen Überbestimmung, was zu entsprechenden mechanischen Verspannungen führen kann und vermieden werden sollte. Vorzugsweise wird das Bauteil deshalb in den Schraubstöcken festgespannt bevor die Schraubstöcke in den Aufnahmenuten arretiert werden, so dass die Schraubstöcke beim Festspannen des Bauteils noch entlang den Aufnahmenuten verschiebbar sind, um mechanische Überbestimmungen zu vermeiden.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht eines Ausführungsbeispiels einer erfindungsgemäßen Modulplatte von schräg oben,
- Figur 2: eine andere Perspektivansicht der Modulplatte aus Figur 1,
- Figur 3: eine Längsschnittansicht durch eine Schlittenführung mit einem Klemmelement zum Festklemmen des Schraubstocks in der Aufnahmenut der Modulplatte,
- Figur 4: eine vergrößerte perspektivische Detailansicht aus Figur 1,
- Figur 5: eine Perspektivansicht auf ein anderes Ausführungsbeispiel einer erfindungsgemäßen Modulplatte mit einer radialen Anordnung der Aufnahmenuten,
- Figur 6: eine Aufsicht auf die Modulplatte gemäß Figur 5, sowie
- Figur 7: eine Längsschnittansicht durch die Modulplatte gemäß den Figuren 5 und 6 entlang der Schnittlinie A-A in Figur 6.

Die Zeichnungen zeigen ein bevorzugtes Ausführungsbeispiel einer erfindungsgemäßen Modulplatte 1, die in einem Bearbeitungszentrum zur spanenden Bearbeitung eingesetzt werden kann, um ein Werkstück 2 während der spanenden Bearbeitung fest zu spannen.

Die Modulplatte 1 besteht im Wesentlichen aus einem Plattenkörper 3 mit einer ebenen Oberseite und mehreren Aufnahmenuten 4, 5, die an der Oberseite des Plattenkörpers 3 angeordnet sind. In diesem Ausführungsbeispiel sind vier der Aufnahmenuten 4 parallel zueinander angeordnet und verlaufen rechtwinklig zu einer zweiten Gruppe von drei Aufnahmenuten 5.Die Erfindung ist jedoch hinsichtlich der Anzahl und Ausrichtung der Aufnahmenuten 4, 5 nicht auf das dargestellte Ausführungsbeispiel beschränkt. Die Aufnahmenuten 4, 5 können also auch in einem anderen Winkel relativ zueinander angeordnet werden.

In den Aufnahmenuten 4, 5 sind Schraubstöcke 6, 7 angebracht, die teilweise herkömmlich ausgebildet sind, so dass zur Vermeidung von Wiederholungen beispielsweise auf WO 2016/150536 A1 und DE 10 2015 003 662 B3 verwiesen wird.

Die einzelnen Schraubstöcke 6, 7 tragen an ihrer Oberseite zwei Spannbacken 8, 9 bzw. 10, 11, die mittels einer drehbar gelagerten Spannspindel 12 relativ zueinander verschoben werden können, um das Werkstück 2 einzuspannen.

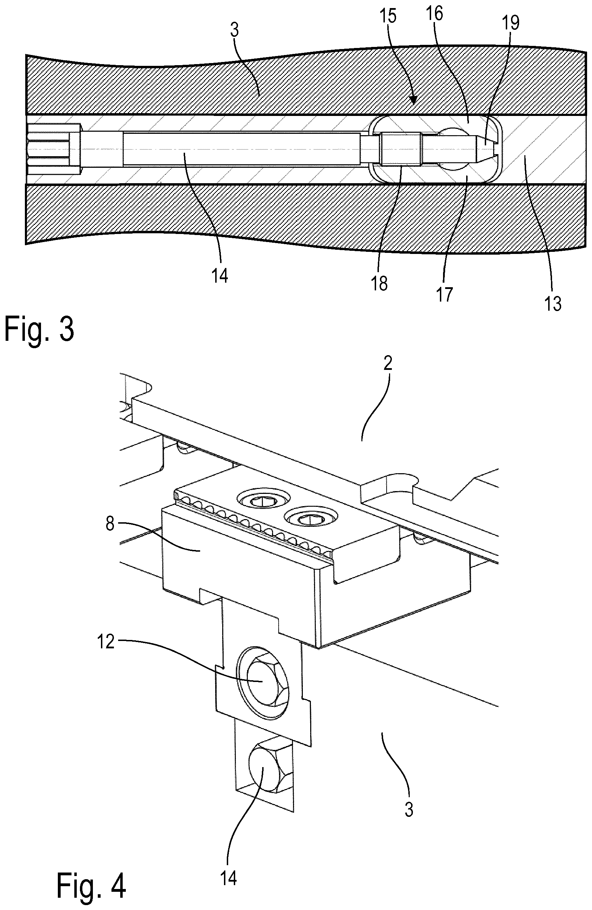

Die Spannspindel 12 ist hierbei in einer Schlittenführung 13 drehbar gelagert, wobei sich die Schlittenführung 13 in einer der Aufnahmenuten 4 bzw. 5 befindet, wie beispielsweise aus Figur 3 ersichtlich ist.

In der Schlittenführung 13 sind in herkömmlicher Weise zwei Schlitten verschiebbar angeordnet, wobei die beiden Schlitten jeweils an ihrer Oberseite die Spannbacken 8-11 tragen, wie es an sich aus dem Stand der Technik bekannt ist.

Die Schlittenführung 13 der einzelnen Schraubstöcke 6, 7 kann in den zugehörigen Aufnahmenuten 4 bzw. 5 wahlweise in Längsrichtung fixiert oder verschoben werden. Zur Arretierung der Schlittenführung 13 in der Aufnahmenut 4 bzw. 5 ist eine Arretierungsspindel 14 vorgesehen, die in der Schlittenführung 13 drehbar gelagert ist.

Die Arretierungsspindel 14 wirkt zusammen mit einem Klemmkörper 15, der zwei Klemmarme 16, 17 aufweist, die seitlich aufgespreizt werden können, um den Klemmkörper 15 und damit auch die Schlittenführung 13 in der zugehörigen Aufnahmenut 4 bzw. 5 in Längsrichtung zu fixieren. Die Arretierungsspindel 14 wirkt über einen Gewindeeingriff 18 auf den Klemmkörper 15, d.h. eine Drehung der Arretierungsspindel 14 führt aufgrund des Gewindeeingriffs 18 zu einer Axialverschiebung des Klemmkörpers 15 relativ zu der Arretierungsspindel 14.

Darüber hinaus weist die Arretierungsspindel 14 eine Konusspitze 19 auf, die auf die Enden der beiden Klemmarme 16, 17 drückt. Dies hat zur Folge, dass eine Axialverschiebung des Klemmkörpers 15 bei einer Drehung der Arretierungsspindel 14 zu einem Aufspreizen der beiden Klemmarme 16, 17 führt, wobei sich die Klemmarme 16, 17 an den Seitenflanken der Aufnahmenut 4, 5 abstützen können und dann zu einer reibschlüssigen Längsfixierung führen.

Die Schraubstöcke 6, 7 können also durch eine Drehung der Arretierungsspindel 14 wahlweise in der jeweiligen Aufnahmenut 4 bzw. 5 fixiert oder in der jeweiligen Aufnahmenut 4, 5 in Längsrichtung verschoben werden.

Zur Vermeidung einer mechanischen Überbestimmung mit entsprechenden Verspannungen besteht die Möglichkeit, dass das Werkstück 2 zunächst in die Schraubstöcke 6, 7 eingelegt wird. Anschließend werden dann sämtliche Schraubstöcke 6, 7 gespannt, wobei die Schraubstöcke 6, 7 jedoch noch in Längsrichtung der jeweiligen Aufnahmenuten 4, 5 verschiebbar sind. Erst nach diesem Spannvorgang werden dann die Schraubstöcke 6, 7 mittels der Arretierungsspindeln 14 arretiert. Auf diese Weise können mechanische Überbestimmungen vermieden werden. Dies ist vorteilhaft, da derartige mechanische Überbestimmungen zu erheblichen mechanischen Spannungen führen würden.

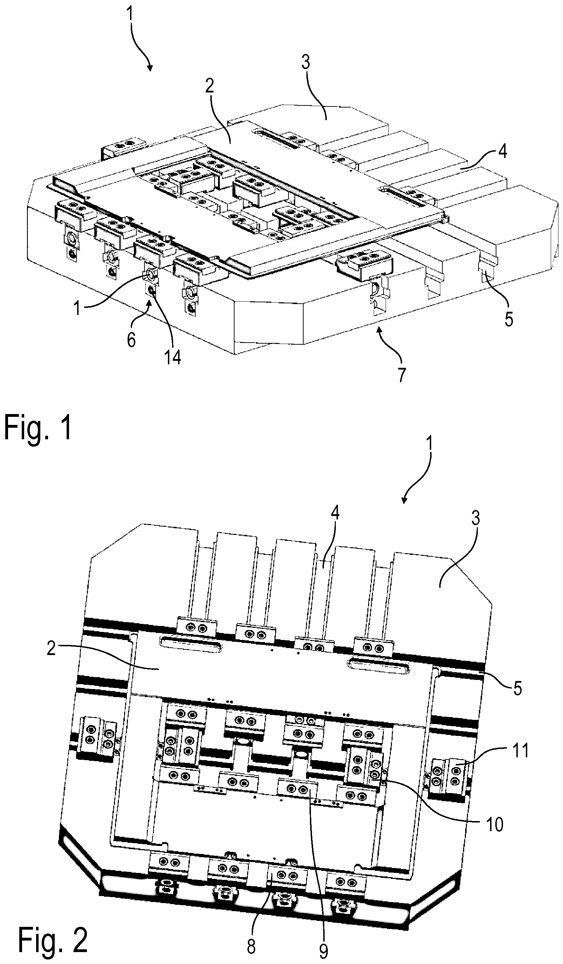

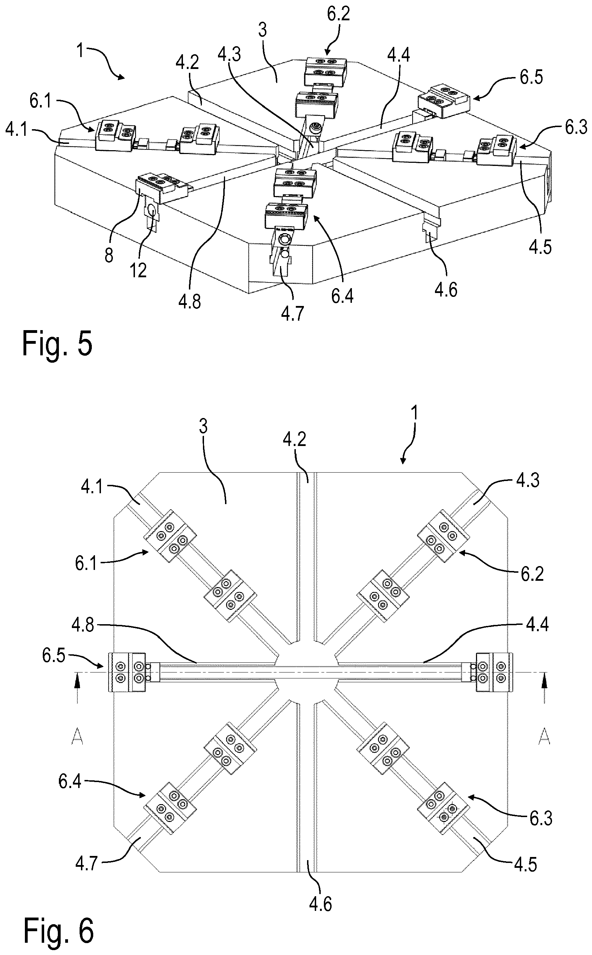

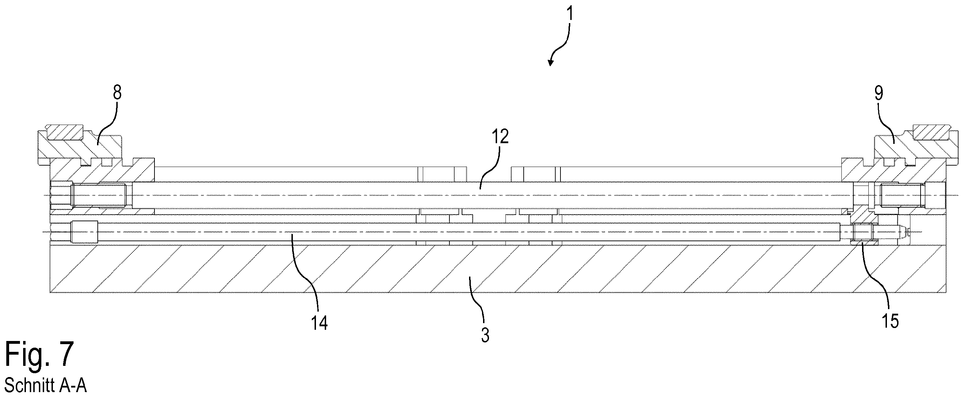

Die Figuren 5 bis 7 zeigen verschiedene Ansichten eines anderen Ausführungsbeispiels einer erfindungsgemäßen Modulplatte 1, die weitgehend mit der vorstehend beschriebenen und in den Figuren 1 bis 4 dargestellten Modulplatte 1 übereinstimmt, so dass zur Vermeidung von Wiederholungen auf die vorstehende Beschreibung verwiesen wird, wobei für entsprechende Einzelheiten teilweise dieselben Bezugszeichen verwendet werden.

Eine Besonderheit dieses Ausführungsbeispiels besteht darin, dass in dem Plattenkörper 3 insgesamt acht Aufnahmenuten 4.1-4.8 radial zu einem Mittelpunkt verlaufen. Dies ermöglicht vorteilhaft das Einspannen runder Bauteile, die hierfür konzentrisch zu dem Mittelpunkt angeordnet werden.

In den Aufnahmenuten 4.1-4.8 sind mehrere Schraubstöcke 6.1-6.5 angeordnet, wobei die Schraubstöcke 6.1-6.5 in der vorstehend beschriebenen Weise durch eine Arretierungsspindel arretierbar oder lösbar sind.

Die Schraubstöcke 6.1-6.4 sind hierbei jeweils mit beiden Spannbacken auf derselben Seite des Mittelpunkts angeordnet.

Der Schraubstock 6.5 ist dagegen mit seinen beiden Spannbacken auf gegenüber liegenden Seiten des Mittelpunkts angeordnet.

Die Erfindung ist nicht auf das vorstehend beschriebene bevorzugte Ausführungsbeispiel beschränkt. Vielmehr ist eine Vielzahl von Varianten und Abwandlungen möglich.

### Bezugszeichenliste:

- 1: Modulplatte
- 2: Werkstück
- 3: Plattenkörper
- 4: Aufnahmenut
- 4.1-4.8: Aufnahmenuten
- 5: Aufnahmenut
- 6: Schraubstock
- 6.1-6.5: Schraubstöcke
- 7: Schraubstock
- 8-11: Spannbacken
- 12: Spannspindel
- 13: Schlittenführung
- 14: Arretierungsspindel
- 15: Klemmkörper
- 16, 17: Klemmarme des Klemmkörpers
- 18: Gewindeeingriff zwischen Arretierungsspindel und Klemmkörper
- 19: Konusspitze der Arretierungsspindel

## Patentansprüche

1. Modulplatte (1) zum Spannen von Bauteilen (2), insbesondere zum Spannen von Werkstücken (2) in einem Bearbeitungszentrum zur spanenden Bearbeitung der gespannten Werkstücke, mit
a) einem Plattenkörper (3) und
b) mindestens einer Aufnahmenut (4, 5; 4.1-4.8) in der Oberseite des Plattenkörpers (3), und
c) mindestens einem Schraubstock (6, 7; 6.1-6.5), der in der Aufnahmenut (4, 5; 4.1-4.8) des Plattenkörpers (3) befestigt ist,
**gekennzeichnet durch**
d) eine drehbare Arretierungsspindel (14), um den Schraubstock (6, 7; 6.1-6.5) in Abhängigkeit von der Drehstellung der Arretierungsspindel (14) wahlweise in der Aufnahmenut (4, 5; 4.1-4.8) zu arretieren oder für eine Verschiebung entlang der Aufnahmenut (4, 5; 4.1-4.8) zu lösen,
e) wobei die Arretierungsspindel (14) an einer Seitenfläche der Modulplatte (1) für eine Bedienung zugänglich ist.

2. Modulplatte (1) nach Anspruch 1, **dadurch gekennzeichnet, dass** der Schraubstock (6, 7; 6.1-6.5) mindestens zwei Spannbacken (8-11) aufweist und eine erste Spannspindel (12), um die Spannbacken (8-11) relativ zueinander zu spannen.

3. Modulplatte (1) nach Anspruch 2, **dadurch gekennzeichnet,**
a) **dass** der Schraubstock (6, 7; 6.1-6.5) eine Schlittenführung (13) aufweist,
b) **dass** zwei Schlitten in der Schlittenführung (13) des Schraubstocks (6, 7; 6.1-6.5) verschiebbar gelagert sind,
c) **dass** die beiden Schlitten an ihrer Oberseite die beiden Spannbacken (8-11) tragen,
d) **dass** die Schlittenführung (13) in der Aufnahmenut (4, 5; 4.1-4.8) angeordnet ist, und
e) **dass** die Schlittenführung wahlweise in der Aufnahmenut (4, 5; 4.1-4.8) in Längsrichtung fixierbar oder in Längsrichtung der Aufnahmenut (4, 5; 4.1-4.8) verschiebbar ist.

4. Modulplatte (1) nach Anspruch 3,
**dadurch gekennzeichnet,**
a) **dass** die Arretierungsspindel (14) in der Schlittenführung (13) des Schraubstocks (6, 7; 6.1-6.5) drehbar gelagert ist,
b) **dass** ein Klemmelement (15) vorgesehen ist, um die Schlittenführung (13) kraftschlüssig in der Aufnahmenut (4, 5; 4.1-4.8) zu fixieren,
c) **dass** das Klemmelement (15) in der Schlittenführung (13) angeordnet ist,
d) **dass** das Klemmelement (15) Klemmarme (16, 17) aufweist, die seitlich aufspreizbar sind, um das Klemmelement (15) in der Aufnahmenut (4, 5; 4.1-4.8) kraftschlüssig zu fixieren, und
e) **dass** die Arretierungsspindel (14) die Klemmarme (16, 17) in Abhängigkeit von ihrer Drehstellung seitlich aufspreizt.

5. Modulplatte (1) nach einem der vorhergehenden Ansprüche, **dadurch gekennzeichnet, dass** die Aufnahmenut (4, 5; 4.1-4.8) eine Quernut aufweist, um den Schraubstock (6, 7; 6.1-6.5) in der Aufnahmenut (4, 5; 4.1-4.8) gegenüber Kräften rechtwinklig zu dem Plattenkörper (3) formschlüssig arretieren zu können.

6. Modulplatte (1) nach einem der vorhergehenden Ansprüche, **dadurch gekennzeichnet, dass** in mindestens einer Aufnahmenut (4, 5; 4.1-4.8) in Nutlängsrichtung hintereinander mehrere Schraubstöcke angeordnet sind.

7. Modulplatte (1) nach einem der vorhergehenden Ansprüche, **dadurch gekennzeichnet,**
a) **dass** in dem Plattenkörper (3) eine erste Gruppe von Aufnahmenuten (4, 5) parallel nebeneinander angeordnet ist, und
b) **dass** in dem Plattenkörper (3) eine zweite Gruppe von Aufnahmenuten (4, 5) parallel nebeneinander angeordnet ist, und
c) **dass** die Aufnahmenuten (4, 5) der ersten Gruppe rechtwinklig zu den Aufnahmenuten (4, 5) der zweiten Gruppe ausgerichtet sind.

8. Modulplatte (1) nach einem der vorhergehenden Ansprüche, **dadurch gekennzeichnet,**
a) **dass** in dem Plattenkörper (3) mehrere Aufnahmenuten (4.1-4.8) angeordnet sind, und
b) **dass** die Aufnahmenuten (4.1-4.8) in dem Plattenkörper (3) im Wesentlichen radial zu einem Mittelpunkt verlaufen.

9. Modulplatte nach Anspruch 8, **dadurch gekennzeichnet,**
a) **dass** bei mindesten einem der Schraubstöcke (6.1-6.5) die beiden Spannbacken auf gegenüber liegenden Seiten des Mittelpunkts angeordnet sind, und/oder
b) **dass** sich die Arretierungsspindel (14) und/oder die Spannspindel (12) durch den Mittelpunkt hindurch erstreckt.

10. Bearbeitungszentrum zur spanenden Bearbeitung von Werkstücken (2) mit einer Modulplatte (1) nach einem der vorhergehenden Ansprüche zum Spannen der zu bearbeitenden Werkstücke (2).

11. Verfahren zum Festspannen eines Bauteils in einer Modulplatte (1), insbesondere in einer Modulplatte (1) nach einem der Ansprüche 1 bis 9, insbesondere zum Spannen eines Werkstücks (2) in einem Bearbeitungszentrum zur spanenden Bearbeitung des festgespannten Werkstücks (2), wobei das Verfahren die folgenden Schritte umfasst:
a) Arretieren eines Schraubstocks (6, 7; 6.1-6.5) in einer Aufnahmenut (4, 5; 4.1-4.8) an der Oberseite der Modulplatte (1), und
b) Festspannen des Bauteils (2) in dem Schraubstock (6, 7; 6.1-6.5),
**dadurch gekennzeichnet,**
c) **dass** der Schraubstock (6,7) mittels einer drehbaren Arretierungsspindel (14) wahlweise in der Aufnahmenut (4, 5; 4.1-4.8) arretiert oder für eine Verschiebung entlang der Aufnahmenut (4, 5; 4.1-4.8) gelöst werden kann,
d) wobei die Arretierungsspindel (14) an einer Seitenfläche der Modulplatte (1) für eine Bedienung zugänglich ist.

12. Verfahren nach Anspruch 11, **dadurch gekennzeichnet,**
a) **dass** mehrere Schraubstöcke (6, 7; 6.1-6.5) in den Aufnahmenuten (4, 5; 4.1-4.8) an der Oberseite der Modulplatte (1) arretiert werden,
b) **dass** das Bauteil (2) in den Schraubstöcken (6, 7; 6.1-6.5) festgespannt wird, und
c) **dass** das Bauteil (2) in den Schraubstöcken (6, 7; 6.1-6.5) festgespannt wird bevor die Schraubstöcke (6, 7; 6.1-6.5) in den Aufnahmenuten (4, 5; 4.1-4.8) arretiert werden, so dass die Schraubstöcke (6, 7; 6.1-6.5) beim Festspannen des Bauteils (2) noch entlang den Aufnahmenuten (4, 5; 4.1-4.8) verschiebbar sind, um mechanische Überbestimmungen zu vermeiden.

## Claims

1. Module plate (1) for clamping components (2), in particular for clamping workpieces (2) in a machining centre for machining the clamped workpieces, having
a) a plate body (3) and
b) at least one receiving groove (4, 5; 4.1-4.8) in the upper side of the plate body (3), and
c) at least one vice (6, 7; 6.1-6.5) which is fastened in the receiving groove (4, 5; 4.1-4.8) of the plate body (3),
**characterized by**
d) a rotatable locking spindle (14) for selectively locking the vice (6, 7; 6.1-6.5) in the receiving groove (4, 5; 4.1-4.8) or releasing it for displacement along the receiving groove (4, 5; 4.1-4.8) as a function of the rotational position of the locking spindle (14),
e) the locking spindle (14) being accessible for operation on a side face of the module plate (1).

2. Module plate (1) according to claim 1, **characterized in that** the vice (6, 7; 6.1-6.5) comprises at least two clamping jaws (8-11) and a first clamping spindle (12) for clamping the clamping jaws (8-11) relative to each other.

3. Module plate (1) according to claim 2, **characterized in that**
a) the vice (6, 7; 6.1-6.5) has a carriage guide (13),
b) two slides are displaceably mounted in the carriage guide (13) of the vice (6, 7; 6.1-6.5),
c) the two slides carry the two clamping jaws (8-11) on their upper side,
d) the carriage guide (13) is arranged in the receiving groove (4, 5; 4.1-4.8), and
e) the carriage guide can be selectively fixed in the receiving groove (4, 5; 4.1-4.8) in the longitudinal direction or displaced in the longitudinal direction of the receiving groove (4, 5; 4.1-4.8).

4. Module plate (1) according to claim 3, **characterized in that**
a) the locking spindle (14) is rotatably mounted in the carriage guide (13) of the vice (6, 7; 6.1-6.5),
b) a clamping element (15) is provided in order to fix the carriage guide (13) force-lockingly in the receiving groove (4, 5; 4.1-4.8),
c) the clamping element (15) is arranged in the carriage guide (13),
d) the clamping element (15) has clamping arms (16, 17) which can be spread out laterally in order to fix the clamping element (15) in the receiving groove (4, 5; 4.1-4.8) in a force-locking manner, and
e) the locking spindle (14) spreads the clamping arms (16, 17) laterally as a function of their rotational position.

5. Module plate (1) according to one of the preceding claims, **characterized in that** the receiving groove (4, 5; 4.1-4.8) has a transverse groove in order to be able to lock the vice (6, 7; 6.1-6.5) in the receiving groove (4, 5; 4.1-4.8) in a form-locking manner with respect to forces at right angles to the plate body (3).

6. Module plate (1) in accordance with one of the preceding claims, **characterized in that** in at least one receiving groove (4, 5; 4.1-4.8) a plurality of vices are arranged one behind the other in the longitudinal direction of the groove.

7. Module plate (1) according to one of the preceding claims, **characterized in that**
a) in the plate body (3) a first group of receiving grooves (4, 5) is arranged parallel side by side, and
b) a second group of receiving grooves (4, 5) is arranged parallel to one another in the plate body (3), and
c) the receiving grooves (4, 5) of the first group are aligned at right angles to the receiving grooves (4, 5) of the second group.

8. Module plate (1) according to one of the preceding claims, **characterized in that**
a) a plurality of receiving grooves (4.1-4.8) are arranged in the plate body (3), and
b) the receiving grooves (4.1-4.8) in the plate body (3) extend substantially radially to a centre point.

9. Module plate according to claim 8, **characterized in that**
a) in at least one of the vices (6.1-6.5) the two clamping jaws are arranged on opposite sides of the centre point, and/or
b) the locking spindle (14) and/or the tensioning spindle (12) extends through the centre point.

10. Machining centre for machining workpieces (2) with a modular plate (1) according to one of the preceding claims for clamping the workpieces (2) to be machined.

11. Method for clamping a component in a module plate (1), in particular in a module plate (1) according to one of claims 1 to 9, in particular for clamping a workpiece (2) in a machining centre for machining the clamped workpiece (2), the method comprising the following steps:
a) Locking a vice (6, 7; 6.1-6.5) in a receiving groove (4, 5; 4.1-4.8) on the upper side of the module plate (1), and
b) clamping the component (2) in the vice (6, 7; 6.1-6.5),
**characterized in that**
c) the vice (6, 7) can be selectively locked in the receiving groove (4, 5; 4.1-4.8) or released for displacement along the receiving groove (4, 5; 4.1-4.8) by means of a rotatable locking spindle (14),
d) the locking spindle (14) being accessible for operation on a side face of the module plate (1).

12. Method according to Claim 11, **characterized in that**
a) several vices (6, 7; 6.1-6.5) are locked in the receiving grooves (4, 5; 4.1-4.8) on the upper side of the module plate (1),
b) the component (2) is clamped in the vices (6, 7; 6.1-6.5), and
c) the component (2) is clamped in the vices (6, 7; 6.1-6.5) before the vices (6, 7; 6.1-6.5) are locked in the receiving grooves (4, 5; 4.1-4.8), so that the vices (6, 7; 6.1-6.5) are still displaceable along the receiving grooves (4, 5; 4.1-4.8) when the component (2) is clamped, in order to avoid mechanical overdeterminations.

## Revendications

1. Plaque modulaire (1) destinée à serrer des composants (2), en particulier destinée à serrer des pièces à usiner (2) dans un centre d'usinage pour l'usinage par enlèvement de copeaux des pièces à usiner serrées, avec
a) un corps de plaque (3) et
b) au moins une rainure de réception (4, 5 ; 4.1-4.8) dans la face supérieure du corps de plaque (3), et
c) au moins un étau (6, 7 ; 6.1-6.5), qui est fixé dans la rainure de réception (4, 5 ; 4.1-4.8) du corps de plaque (3),
**caractérisée par**
d) une broche de blocage rotative (14) pour, en fonction de la position de rotation de la broche de blocage (14), au choix bloquer l'étau (6, 7 ; 6.1-6.5) dans la rainure de réception (4, 5 ; 4.1-4.8) ou pour le desserrer pour un déplacement le long de la rainure de réception (4, 5 ; 4.1-4.8),
e) dans laquelle la broche de blocage (14) est accessible au niveau d'une surface latérale de la plaque modulaire (1) pour un fonctionnement.

2. Plaque modulaire (1) selon la revendication 1, **caractérisée en ce que** l'étau (6, 7 ; 6.1-6.5) présente au moins deux mors (8-11) et une première broche de serrage (12) pour serrer les mors (8-11) l'un par rapport l'autre.

3. Plaque modulaire (1) selon la revendication 2,
**caractérisée en ce**
a) **que** l'étau (6, 7 ; 6.1-6.5) présente un guide de chariot (13),
b) **que** deux chariots sont logés de manière mobile dans le guide de chariot (13) de l'étau (6, 7 ; 6.1-6.5),
c) **que** les deux chariots portent au niveau de leur face supérieure les deux mors (8-11),
d) **que** le guide de chariot (13) est agencé dans la rainure de réception (4, 5 ; 4.1-4.8), et
e) **que** le guide de chariot peut au choix être fixé dans la direction longitudinale dans la rainure de réception (4, 5 ; 4.1-4.8) ou être déplacé dans la direction longitudinale de la rainure de réception (4, 5 ; 4.1-4.8).

4. Plaque modulaire (1) selon la revendication 3,
**caractérisée en ce**
a) **que** la broche de blocage (14) est logée de manière rotative dans le guide de chariot (13) de l'étau (6, 7 ; 6.1-6.5)
b) **qu'**un élément de serrage (15) est prévu pour fixer le guide de chariot (13) par force dans la rainure de réception (4, 5 ; 4.1-4.8),
c) **que** l'élément de serrage (15) est agencé dans le guide de chariot (13),
d) **que** l'élément de serrage (15) présente des bras de serrage (16, 17), qui peuvent être écartés latéralement pour fixer l'élément de serrage (15) par force dans la rainure de réception (4, 5 ; 4.1-4.8) et
e) **que** la broche de blocage (14) écarte les bras de serrage (16, 17) latéralement en fonction de leur position de rotation.

5. Plaque modulaire (1) selon l'une quelconque des revendications précédentes, **caractérisée en ce que** la rainure de réception (4, 5 ; 4.1-4.8) présente une rainure transversale pour pouvoir bloquer par complémentarité de forme l'étau (6, 7 ; 6.1-6.5) dans la rainure de réception (4, 5 ; 4.1-4.8) par rapport à des forces perpendiculairement au corps de plaque (3).

6. Plaque modulaire (1) selon l'une quelconque des revendications précédentes, **caractérisée en ce que** plusieurs étaux sont agencés les uns derrière les autres dans la direction longitudinale de rainure dans au moins une rainure de réception (4, 5 ; 4.1-4.8).

7. Plaque modulaire (1) selon l'une quelconque des revendications précédentes, **caractérisée en ce**
a) **qu'**un premier groupe de rainures de réception (4, 5) est agencé parallèlement les unes à côté des autres dans le corps de plaque (3),
b) **qu'**un deuxième groupe de rainures de réception (4, 5) est agencé parallèlement les unes à côté des autres dans le corps de plaque (3), et
c) **que** les rainures de réception (4, 5) du premier groupe sont orientées perpendiculairement aux rainures de réception (4, 5) du deuxième groupe.

8. Plaque modulaire (1) selon l'une quelconque des revendications précédentes, **caractérisée en ce**
a) **que** plusieurs rainures de réception (4.1-4.8) sont agencées dans le corps de plaque (3), et
b) **que** les rainures de réception (4.1-4.8) dans le corps de plaque (3) s'étendent sensiblement radialement vers un point central.

9. Plaque modulaire selon la revendication 8,
**caractérisée en ce**
a) **que** pour au moins un des étaux (6.1-6.5), les deux mors sont agencés sur des côtés opposés du point central, et/ou
b) **que** la broche de blocage (14) et/ou la broche de serrage (12) s'étend à travers le point central.

10. Centre d'usinage pour l'usinage par enlèvement de copeaux de pièces à usiner (2) avec une plaque modulaire (1) selon l'une quelconque des revendications précédentes pour le serrage des pièces à usiner (2).

11. Procédé de serrage d'un composant dans une plaque modulaire (1), en particulier dans une plaque modulaire (1) selon l'une quelconque des revendications 1 à 9, en particulier pour le serrage d'une pièce à usiner (2) dans un centre d'usinage pour l'usinage par enlèvement de copeaux de la pièce à usiner serrée (2), dans lequel le procédé comprend les étapes suivantes :
a) le blocage d'un étau (6, 7 ; 6.1-6.5) dans une rainure de réception (4, 5 ; 4.1-4.8) au niveau de la face supérieure de la plaque modulaire (1), et
b) le serrage du composant (2) dans l'étau (6, 7 ; 6.1-6.5),
**caractérisé en ce**
c) **que** l'étau (6, 7) peut au choix être bloqué dans la rainure de réception (4, 5 ; 4.1-4.8) ou être desserré pour un déplacement le long de la rainure de réception (4, 5 ; 4.1-4.8) au moyen d'une broche de blocage rotative (14),
d) dans lequel la broche de blocage (14) est accessible au niveau d'une surface latérale de la plaque modulaire (1) pour un fonctionnement.

12. Procédé selon la revendication 11, **caractérisé en ce**
a) **que** plusieurs étaux (6, 7 ; 6.1-6.5) sont bloqués dans les rainures de réception (4, 5 ; 4.1-4.8) au niveau de la face supérieure de la plaque modulaire (1),
b) **que** le composant (2) est serré dans les étaux (6, 7 ; 6.1-6.5), et
c) **que** le composant (2) est serré dans les étaux (6, 7 ; 6.1-6.5) avant que les étaux (6, 7 ; 6.1-6.5) ne soient bloqués dans les rainures de réception (4, 5 ; 4.1-4.8) de sorte que les étaux (6, 7 ; 6.1-6.5) lors du serrage du composant (2) sont encore mobiles le long des rainures de réception (4, 5 ; 4.1-4.8) pour éviter des surdéterminations mécaniques.
